(19) Europäisches Patentamt

European Patent Office

Office européen des brevets

(11) **EP 1 282 070 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(51) Int Cl.⁷: **G06K 9/00**, G06K 9/68, G06K 9/62, G06T 9/00

(21) Anmeldenummer: **01118536.0**

(22) Anmeldetag: **01.08.2001**

(54) **Hierarchische Bildmodellanpassung**

Hierarchical adaptation of an image model

Adaptation hierarchique d'un modèle d'un image

(84) Benannte Vertragsstaaten:
**AT BE CH CY DE DK ES FI FR GB GR IE IT LI LU MC NL PT SE TR**

(43) Veröffentlichungstag der Anmeldung:
**05.02.2003 Patentblatt 2003/06**

(73) Patentinhaber: **ZN Vision Technologies AG**
**44801 Bochum (DE)**

(72) Erfinder:
• **Gehlen, Stefan, Dr.**
**44869 Bochum (DE)**
• **Rinne, Michael**
**44357 Dortmund (DE)**
• **Werner, Martin, Dr.**
**58675 Hemer (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**EP-A- 0 528 631           EP-B- 0 567 680**
**WO-A-99/53443**

• **"UPDATING ATTRIBUTES OR DATA OF PARENT VIA CHANGES TO THE CHILD" IBM TECHNICAL DISCLOSURE BULLETIN, IBM CORP. NEW YORK, US, Bd. 27, Nr. 12, 1. Mai 1985 (1985-05-01), Seite 7066 XP000714887 ISSN: 0018-8689**
• **Marr D.; Nishihara H.K.; 'Representation and recognition of the spatial organization of three-dimensional shapes', Proc. R. Soc. Lond. B., 200, 269-294, 1978 XP008018438**

**Beschreibung**

Gebiet der Erfindung

Die Erfindung betrifft ein Bildverarbeitungsverfahren, bei dem eine Anpassung von Bildanpassungsmodellen, welche Beschreibungen von Objekten darstellen, an digitalisierten Bilddaten durchgeführt wird, und insbesondere ein Verfahren, das für die Bilderkennung, d.h. Erkennung individueller Objekte in einem Bild, zur Analyse von Szenen, insbesondere zur Erkennung und Zuordnung von Objekten, zur Steuerung von Systemkomponenten, z.B. Avataren, sowie zur Bildkomprimierung und -dekomprimierung geeignet ist.

Dabei wird der Ausdruck "Bilderkennung" in einer weit umfassenden Bedeutung ausgelegt. Insbesondere soll der Begriff "Bilderkennung" die Identifizierung eines Objekts in einem Bild durch Vergleich mit Referenzbildern und die Klassifizierung von in einem Bild vorliegenden Objekten umfassen.

Stand der Technik

In der digitalen Bildverarbeitung existieren eine Reihe von Verfahren, die das Erkennen von individuellen Objekten in Bildern erlauben. Als Beispiel sei das sogenannte "Template Matching" Verfahren genannt, welches mit einer einfachen Kopie der Abbildung eines Objekts auf die Suche nach diesem Objekt geht.

Ein Verfahren, bei dem Vergleichsmodelle (Referenzstrukturen) mit Bilddaten verglichen werden, ist aus der EP-A-0567680 bekannt. Die EP-A-0567680 offenbart ferner einen hierarchischen Strukturgraphen, der Knoten aufweist, wobei jeder Knoten ein Vergleichsmodell repräsentiert, eine vorgegebene Anzahl von übereinander angeordneten Ebenen, wobei in jeder Ebene wenigstens ein Knoten liegt, und Kanten, die paarweise vorbestimmte Knoten verschiedener Ebenen verbinden und für jedes Knotenpaar einen Vaterknoten als den Knoten in der unteren Ebene und einen Sohnknoten als den Knoten in der oberen Ebene definieren. Das Anwenden des Strukturgraphen auf die Bilddaten beginnt mit der untersten Ebene, wobei das Abarbeiten eines Knotens die Schritte umfasst, dass ein Maß für die Ähnlichkeit von Vergleichmodell und damit verglichener Struktur im "realen" Bild ermittelt wird, also ein Maß für die Güte des Bildvergleichs.

Ein weiteres aus der Technik bekanntes Verfahren ist das sogenannte "Graph Matching" Verfahren, das in der deutschen Patentschrift DE 4406020 beschrieben ist.

Ein Verfahren zum automatisierten Erkennen einer oder mehrerer Strukturen in digitalisierten Bilddaten wird auch in der Druckschrift DE 19837004 beschrieben.

Mit der Objekterkennung beim Sehprozess beschäftigt sich die Druckschrift "Representation and recognition of the spatial organization of three-dimensional shapes", D. Marr und H.K. Nishihara, Proc. R. Soc. Lond. B. 200, 269-294 (1978). Hierin wird ein hierarchisch angeordneter Katalog von 3-D Modellen, deren Grundbausteine Zylinder sind, bereitgestellt, und ein neues Modell anhand der im Katalog vorhandenen Modelle klassifiziert, wobei entlang der vorgegebenen Hierarchie eine Abarbeitung mit grober Form und Orientierung beginnt und zu immer feineren Details hin voranschreitet.

Ein Nachteil der in der Technik bekannten Verfahren ist, dass einfachere Anpassungsverfahren, die mit einem vergleichsweise moderatem Rechenaufwand durchgeführt werden können, wenig flexibel sind und schnell an ihre Grenzen stoßen, während leistungsfähigere und flexiblere Verfahren mit einem sehr hohen Rechenaufwand verbunden sind.

Beschreibung der Erfindung

Demzufolge ist es eine Aufgabe der Erfindung, ein effizienteres Anpassungsverfahren zur Bildverarbeitung bereitzustellen, das flexibel sowohl bei einfach aufgebauten Bildern als auch bei komplexen Bildszenen einsetzbar ist.

Diese Aufgabe wird durch das im Anspruch 1 beschriebene Verfahren gelöst.

Es wird somit ein Bildverarbeitungsverfahren bereitgestellt, bei dem Bildanpassungsmodelle, welche Beschreibungen von Objekten darstellen, an digitalisierte Bilddaten, angepasst werden, wobei das Verfahren die folgenden Schritte umfasst: (i) Bereitstellen eines hierarchischen Strukturgraphen, mit: Knoten, die jeweils wenigstens ein parametrisiertes Bildanpassungsmodell repräsentieren, einer vorgegebenen Anzahl von übereinander angeordneten Ebenen, wobei in jeder Ebene wenigstens ein Knoten liegt, Kanten, die paarweise vorbestimmte Knoten verschiedener Ebenen verbinden und für jedes Knotenpaar einen Vaterknoten als den Knoten in der unteren Ebene und einen Sohnknoten als den Knoten in der oberen Ebene definieren; (ii) Anwenden des Strukturgraphen auf die Bilddaten, indem, mit der untersten Ebene beginnend, wenigstens ein Knoten abgearbeitet wird, wobei das Abarbeiten eines Knotens die Schritte umfasst: Anpassen seines wenigstens einen Bildanpassungsmodells an die Bilddaten durch Variation der Modellparameter, Ermitteln eines Anpassungsmaßes für jede Parametervariation, als Maß für die Güte der Bildanpassung, und Ermitteln einer Bewertung für jede Parametervariation, unter Berücksichtigung des wenigstens einen ermittelten Anpassungsmaßes, und wobei die für jede Parametervariation ermittelte Bewertung als Kriterium für das Abarbeiten eines Sohnknotens des abgearbeiteten Knotens verwendet wird und, falls das Kriterium erfüllt ist, das Abarbeiten des Sohnknotens mit der Initialisierung seines wenigstens einen Anpassungsmodells durch vorbestimmte Parameter des Vaterknotens beginnt.

Ein Strukturgraph besteht somit aus einer Menge von Knoten, die Bildanpassungsmodelle und deren zugehörige Bildanpassungsverfahren repräsentieren, und Kanten, die jeweils ein Paar von Vater-/Sohnknoten und für dieses jeweils eine Abarbeitungsreihenfolge definieren.

Ein wesentlicher Vorteil des erfindungsgemäßen Verfahrens ist, dass das erfindungsgemäße Verfahren durch Verwendung eines entsprechend bereitgestellten Strukturgraphen eine effiziente Kombination höchst unterschiedlicher Bildanpassungsmodelle und zugehöriger Verfahren für die Verarbeitung von digitalisierten Bilddaten ermöglicht. So können auf den unteren Ebenen des Strukturgraphen einfache Bildanpassungsmodelle verwendet werden, die erste Rückschlüsse auf die Position von Objekten in den den Bilddaten entsprechenden Bildern erlauben. Hierzu können Verfahren angewandt werden, die einen vergleichsweise geringen Rechenaufwand erfordern, wie z.B. einfache Differenzbildverfahren. Weitere Verfahren beruhen auf beispielsweise auf der Bewertung von Form und Geometrie und der Relation von Objekten zueinander, auf Farbklassifikationen, Template Matching, Hough-Transformationen, Verfahren zur Segmentierung (z.B. Region-Growing-Ansätze), der Nutzung von Stereoinformation (z.B. Disparitätsschätzung), der Extraktion und Beschreibung von Texturen, oder der Verwendung neuronaler Verfahren zur Klassifikation von Bildregionen.

Die Anpassung eines Bildanpassungsmodells erfolgt durch die Variation der Parameter des Bildanpassungsmodells. Diese Parameter umfassen zum Beispiel Translation (Position), Skalierung und Rotation (Orientierung) in der Bildebene, aber auch lokale Veränderungen der Modelle.

Jedem Bildanpassungsmodell ist femer eine Vorschrift zugeordnet, mit der ein Maß für die Güte der Anpassung des Bildanpassungsmodells an die zu verarbeitenden Bilddaten bestimmt werden kann.

Es ist zu beachten, dass die Verwendung der Vater/Sohn-Beziehung lediglich zur Veranschaulichung der Abarbeitungsreihenfolge dient, aber im Allgemeinen nicht eindeutig ist, da nicht nur jeder Vaterknoten mehrere Sohnknoten besitzen kann, sondern auch jeder Sohnknoten im Strukturgraphen mehrere Vaterknoten besitzen kann.

Bei einer besonders für das Erkennen von Objekten bevorzugten Weiterbildung des erfindungsgemäßen Verfahrens, wird ein Strukturgraph bereitgestellt, der genau einen Knoten in jeder Ebene enthält, wobei der Knoten wenigstens ein Bildanpassungsmodell repräsentiert, und vorgegebenen Knoten ein unterer Schwellwert und/oder ein oberer Schwellwert zugeordnet wird. In dieser Weiterbildung wird das Verfahren mit dem Ergebnis beendet, dass kein Objekt der vorgegebenen Objektklasse erkannt wird, falls für einen Knoten die Bewertung für jede Parametervariation unterhalb eines dem Knoten zugeordneten unteren Schwellwerts liegt, oder dass wenigstens ein Objekt der vorgegebenen Objektklasse erkannt wird, falls für einen Knoten die Bewertung für wenigstens eine Parametervariation oberhalb des dem Knoten zugeordneten oberen Schwellwerts liegt oder wenn der Endknoten erreicht wird.

Diese Weiterbildung lässt sich besonders vorteilhaft für die Identifizierung von Personen verwenden. Es kann eine im Vergleich mit herkömmlichen Verfahren deutlich schnellere weil effizientere Auswertung von Bilddaten durchgeführt werden, indem die Auswertung auf einer groben Skala auf der untersten Ebene des Strukturgraphen beginnt, und die dabei ermittelten Parameter zur Auswertung von Einzelheiten auf höheren Hierarchieebenen, z.B. als Startwerte für die jeweiligen Anpassungsvorgänge, herangezogen werden.

Bei einer anderen Weiterbildung des erfindungsgemäßen Verfahrens weist der Strukturgraph für verschiedene Orientierungen und/oder Anordnungen von Elementen eines Objekts wenigstens einen Knoten mit wenigstens einem Bildanpassungsmodell für die zu erkennende Orientierung auf, und vorgegebene Knoten weisen einen oberen und/oder unteren Schwellwert für die Bewertung der Parametervariationen. Die Durchführung des Verfahrens erfolgt so, dass auf das Abarbeiten von Sohnknoten derjenigen abgearbeiteten Knoten verzichtet wird, für die die Bewertung für jede Parametervariation unterhalb des dem jeweiligen Knoten zugeordneten unteren Schwellwerts liegt, mit dem Ergebnis, dass die entsprechenden Orientierungen und/oder Anordnungen der Elemente des Objekts im Bild nicht vorliegen; dass Sohnknoten derjenigen abgearbeiteten Knoten abgearbeitet werden, für die die Bewertung für wenigstens eine Parametervariation zwischen den dem jeweiligen Knoten zugeordneten unteren und oberen Schwellwerten liegt; und dass auf das Abarbeiten von Sohnknoten für die Parametervariationen verzichtet wird, deren Bewertung oberhalb des dem jeweiligen Knoten zugeordneten oberen Schwellwerts liegt, mit dem Ergebnis, dass die Orientierung und/oder Anordnung der Elemente des Objekts als im Bild vorliegend eingestuft wird, die die beste Bewertung auf der höchsten vollständig abgearbeiteten Ebene erhielt.

Diese Weiterbildung ist besonders vorteilhaft zur Erkennung der Orientierung eines Objekts einer Objektklasse in einem Bild. Insbesondere kann diese Weiterbildung vorteilhaft zur Posenschätzung und Unterscheidung von unterschiedlichen Posen eingesetzt werden.

Eine alternative vorteilhafte Weiterbildung des erfindungsgemäßen Verfahrens ermöglicht das Erkennen von Objekten unterschiedlicher Objektklassen und der Anordnung der Objekte in einem Bild, und kann dadurch vorteilhaft für eine Szenenanalyse eingesetzt werden. Dabei weist der Strukturgraph für jede Objektklasse wenigstens einen Knoten mit wenigstens einem Bildanpassungsmodell für die Objektklasse auf, wobei vorgegebene Knoten einen unteren und/oder oberen Schwellwert für die Bewertung der Parametervariationen aufweisen. Bei dieser Weiterbildung wird auf das Abarbeiten von Sohnknoten derjenigen abgearbeiteten Knoten verzichtet, für die die Bewertung für jede Parametervariation unterhalb des für den jeweiligen Knoten vorgegebenen unteren Schwellwerts liegt, mit dem Ergebnis, dass das zugehörige Objekt als im Bild nicht vorliegend eingestuft wird; es werden Sohnknoten derjenigen abgearbeiteten Knoten abgearbeitet, für die die Bewertung für wenigstens eine Parametervariation zwischen dem für den jeweiligen Knoten vorgegebenen unteren und oberen Schwellwert liegt; und es wird auf das Abarbeiten von Sohnknoten für die Parametervariationen verzichtet, deren Bewertung oberhalb des dem jeweiligen Knoten zugeordneten oberen Schwellwerts liegt, mit dem Ergebnis, dass das zugehörige Objekt als im Bild vorliegend eingestuft wird.

Ein für eine Szenenanalyse geeigneter Strukturgraph ist im Allgemeinen ein komplexes Gebilde, wobei es zu einem Endknoten (d.h. einem Knoten der obersten Ebene des Strukturgraphen) typischerweise mehrere Wege gibt, wobei der Begriff "Weg" eine Sequenz von in Vater/Sohn-Beziehung stehenden Knoten bezeichnen soll.

Dies bedeutet, dass es Knoten im Graphen gibt, die mehr als einen Vaterknoten besitzen. Dies erlaubt, einzelne Objekte als Teile anderer komplexer Objekte wiederzuverwenden. Dadurch ergibt sich nicht nur eine sparsame Repräsentation des Wissens über Objekte im Strukturgraphen, sondern der Auswertungsprozess profitiert davon, da nicht mehr die gleichen Objektteile in unterschiedlichen Kontexten miteinander in Konkurrenz stehen.

Um eine Beschreibung einer komplexen Szene zu generieren wird ein Strukturgraph verwendet, dessen Wege an Endknoten enden, deren Bildanpassungsmodelle verschiedenartige Objekte repräsentieren. Die untersten Schichten im Strukturgraphen enthalten Bildanpassungsmodelle, die die Objekte nach Größe, Orientierung und grober Struktur unterscheiden. In den folgenden Schichten werden die Objekte in verschiedene Klassen unterteilt, um schließlich an den Endknoten nach allen oder einem Großteil ihrer konkreten Ausprägungen unterschieden zu werden.

Der Auswertungsprozess verarbeitet zunächst die Bildanpassungsmodelle der untersten Schicht mit den ihnen zugeordneten Verfahren. Dabei wird die grobe Position der Objekte bestimmt. Mit der Entscheidung für eine Parametervariation zu den Bildanpassungsmodellen eines Knotens favorisiert das Verfahren zunächst Objekte der entsprechenden Objektklasse in der durch die Parametervariation festgelegten Ausprägung. Die weitere Auswertung erfolgt im nächsten Schritt mit der Verarbeitung der Bildanpassungsmodelle der Sohnknoten des verarbeiteten Knotens mit der besten Bewertung für eine Parametervariation, wenn die Bewertung über einer vorgegebenen unteren und unter einer vorgegebenen oberen Schwelle für den Knoten liegt. Bei diesem Verarbeitungsschritt wird ein Teil der Parameter benutzt, um die Startwerte, insbesondere die Position, für die Bildanpassungsmodelle festzulegen und die möglichen Variationen der Parameter dieser Bildanpassungsmodelle einzuschränken.

Das Ergebnis der Auswertung ist eine Menge von Parametervariationen, die zu im Bild erkannten Objekten gehören. Dabei bestimmen die Parameter die Position und weitere Eigenschaften der Bildanpassungsmodelle, wie zum Beispiel die Größe.

In einer besonders vorteilhaften Weiterbildung des erfindungsgemäßen Verfahrens wird jedem Knoten des Strukturgraphen ein unterer Schwellwert zugeordnet und auf das Abarbeiten von Sohnknoten eines Knotens verzichtet, wenn jede Parametervariation eine Bewertung unterhalb des für den Knoten vorgegebenen Schwellwerts ergibt.

Dadurch werden wenig erfolgsversprechende Anpassungsvorgänge frühzeitig abgebrochen, was zu einer schnelleren Durchführung des Verfahrens führt. Wenn es die verwendeten Modelle erlauben, werden die Anpassungsmaße und die Bewertungen so definiert, dass die Bewertung verschiedener Knoten direkt miteinander verglichen werden kann. In diesem Fall kann in der letztgenannten Weiterbildung ein einheitlicher Schwellwert für alle Knoten vorgegeben werden.

In einer bevorzugten Weiterbildung des erfindungsgemäßen Verfahrens sind die unteren und/oder oberen Schwellwerte dynamisch anpassbar.

So können die Schwellen zum Beispiel aufgrund der Ergebnisse für ein vorausgegangenes Bild einer Folge verändert werden, um eine gewisse Erwartung über den zeitlichen Verlauf der Bildfolge, insbesondere der Erkennung des bereits erkannten Objekts im nächsten Bild, auszudrücken.

Besonders vorteilhaft können bei den erfindungsgemäßen Verfahren zum Abarbeiten von Sohnknoten wenigstens teilweise Parameter der abgearbeiteten Vaterknoten übernommen werden.

So kann z. B. auf einer unteren Ebene des Strukturgraphen der Umriss eines Objektes ermittelt werden, worauf die entsprechenden Parameter in die Modelle der Sohnknoten übernommen werden. Der Begriff "Übernahme" kann bedeuten, dass die Parameterwerte direkt in ein Anpassungsmodell eingehen, ohne dort neu zur Variation freigegeben zu werden, aber auch, dass sie als Startwerte des Anpassungsmodells dienen, oder die Startwerte aus ihnen berechnet werden. Die Parameter der Vaterknoten können ferner vorteilhaft dazu verwendet werden, dass sie Grenzen definieren, innerhalb derer entsprechende Parameter der Bildanpassungsmodelle der Sohnknoten variiert werden dürfen. In all diesen Fällen wird der Rechenaufwand stark reduziert, am stärksten natürlich im ersten Fall.

In einer vorteilhaften Weiterbildung wird bei der Bewertung von Parametervariationen für Bildanpassungsmodelle von Sohnknoten die entsprechende Bewertung der Parametervariationen für Bildanpassungsmodelle des Vaterknotens berücksichtigt. Dies ist insbesondere dann von Vorteil, wenn auf der höchsten jeweils abgearbeiteten Ebene verschiedene Anpassungsvorgänge zu nahe beieinanderliegenden Bewertungen führen, was die Gefahr in sich birgt, dass das Verfahren beim Fortsetzen in eine suboptimale Lösung läuft, die nicht dem bestmöglichen Ergebnis entspricht.

In einer Weiterbildung des erfindungsgemäßen Verfahren werden jedem Bildanpassungsmodell und/oder jeder Kante Gewichte zugeordnet, die in die Bewertung eingehen.

Die Gewichtung der Bildanpassungsmodelle und/oder der Kanten kann sinnvoll sein, wenn eine bestimmte Erwartungshaltung an ein zu verarbeitendes Bild vorliegt, und/oder wenn ein Knoten mehrere Bildanpassungsmodelle umfasst, die unterschiedliche Aussagekraft haben. Wenn ein Knoten mehrere Sohnknoten aufweist, kann die Gewichtung der Kanten auch dazu verwendet werden, eine Abarbeitungsreihenfolge der Sohnknoten vorzugeben, was bei geeigneter Wahl von Schwellwerten (Abbruchkriterien) überflüssigen Rechenaufwand vermeiden helfen kann. Femer können aussagekräftigere oder plausiblere Kombinationen von Bildanpassungsmodellen unterschiedlicher Knoten angemessen berücksichtigt werden, da diese Gewichtsfaktoren als vorbestimmtes Maß dienen können, welcher Kombination von Bildanpassungsmodellen von Knoten verschiedener Ebenen besonders hohe Aussagekraft eingeräumt wird.

Bei einer besonders bevorzugten Weiterbildung aller bisher genannten Verfahren basieren die Bildanpassungsmodelle der Knoten der obersten Ebene auf digitalisierten Referenzbilddaten und/oder die Bildanpassungsmodelle vorbestimmter Knoten auf den Bildanpassungsmodellen ihrer Sohnknoten.

So kann auf einfache Art und Weise eine Hierarchie in der Komplexität der Bildanpassungsmodelle erreicht werden, wobei z.B. die Bildanpassungsmodelle der Endknoten detaillierten Porträts entsprechen, während Bildanpassungsmodelle typischerweise einfacher aufgebaut sind, d.h., z.B. weniger Parameter aufweisen, je tiefer die Ebene liegt. Solche einfacheren Bildanpassungsmodelle können schnell angepasst werden, wodurch ein schnelles und effektives Auswerten in den unteren Ebenen gewährleistet wird, was sich wiederum auf die Gesamteffektivität des Verfahrens positiv auswirkt.

Besonders bevorzugt umfassen die Bildanpassungsmodelle der Knoten des Strukturgraphen Graphen von Merkmalen, sog. Modellgraphen, die aus einer zweidimensionalen Anordnung von Modellgraphknoten und -kanten bestehen. Dabei sind den Modellgraphknoten Merkmale zugeordnet, welche Informationen über Bilddaten enthalten. Die Modellgraphkanten kodieren die relative Anordnung der Modellgraphknoten.

Besonders bevorzugte Modellgraphen sind sogenannte Referenzgraphen, deren Merkmale die Ergebnisse der Anwendung einer Menge von Filtern, z.B. Gaborfiltem, auf die digitalisierten Daten von Vergleichsbildern sind. Dabei können die Merkmale die Ergebnisse der Anwendung einer Menge von Filtern auf Bilddaten sein, welche selbst von unterschiedlichen Vergleichsbildern stammen können.

Die Menge der Filter kann mittels Skalierung und Rotation aus einem Urfilter gewonnen werden. Die Skalierung der Filter, aus denen die Merkmale gewonnen werden, wird vorzugsweise von Hierarchiestufe zu Hierarchiestufe kleiner, womit sich die Frequenz erhöht bzw. die Auflösung verfeinert. Diese Art der Merkmale werden als Jets bezeichnet.

Bei der Anpassung der Bildanpassungsmodellgraphen wird die Ähnlichkeit der Jets jedes Bildanpassungsmodellgraphknotens k mit den korrespondierenden Jets des aktuellen Bildes berechnet. Zudem können jedem Bildanpassungsmodellgraphknoten auch mehrere Merkmale m zugeordnet sein, die aus unterschiedlichen Bildern oder einem vorhergehenden Lernprozess für die Bildanpassungsmodellmerkmale generiert wurden. Für jeden Bildanpassungsmodellgraphknoten wird die Ähnlichkeit seines Jets zu dem Jet aus dem aktuellen Bild für eine bestimmte Position berechnet. Hierzu werden die Jets eines jeden Referenzgraphen $\underline{j}(k,m)$ mit den Jets aus dem aktuellen Bild $\underline{\tilde{j}}(k)$ verglichen.

Im allgemeinsten Fall ergibt sich für das die Gesamtähnlichkeit zwischen Bildanpassungsmodellgraphen und Bild beschreibende Anpassungsmaß für die Parametervariationen zu den Bildanpassungsmodellen nach der Formel

$$S^{(n)} = f^{(n)}(P_k^{(n)} \, \underline{j}(k,m), P_k^{(n)} \, \underline{\tilde{j}}(k), \underline{d}^{(0)}(k,m), \underline{d}^{(n)}(k,m)), \ k \in K'(n) \subseteq K \, ,$$

wobei

$\underline{j}(k,m)$ der Jet des Bildanpassungsmodells $m$ am Knoten $k$ ist,

$\underline{\tilde{j}}(k)$ der Jet des Bildes an der Position des Knoten $k$ ist,

$\underline{d}^{(0)}(k,m)$ die ursprüngliche Position des Knoten $k$ des Bildanpassungsmodells $m$ ist,

$\underline{d}^{(n)}(k,m)$ die Position des Knoten $k$ des Bildanpassungsmodells $m$ im Schritt $n$ ist,

$f^{(n)}(...)$ ein Funktional der Bildanpassungsmodelljets und der Bildjets an korrespondierenden Orten ist,

$P_k^{(n)}$ eine Abbildung der Jets $\underline{j}(k,m)$ bzw. $\underline{\tilde{j}}(k)$ darstellt, und

$K'(n)$ eine Teilmenge der Menge $K$ aller Graphknoten $k$ ist.

Die ursprüngliche Position und deren Änderung wird für die Berechnung der topologischen Kosten verwendet, welche zu starke Verformungen des Bildanpassungsmodells bestraft. Der Schrittparameter $n$ kennzeichnet dabei, dass die Berechnung der Gesamtähnlichkeit sowohl während der einzelnen Phasen des Anpassungsprozesses für ein Bildanpassungsmodell, wie auch von Bildanpassungsmodell zu Bildanpassungsmodell variiert. Insbesondere der Anpassungsprozeß wird in mehrere Phasen, wie z.B. die grobe Positionierung, die Reskalierung und die Feinanpassung des Bildanpassungsmodells unterteilt. In jeder Phase wird dabei die Gesamtähnlichkeit auf eine adäquate Art berechnet.

In einer bevorzugten Form wird die Ähnlichkeit des Graphen im Schritt *n* zu

$$S^{(n)} = f_2^{(n)}(k, f_1^{(n)}(n, s(P_k^{(n)} \underline{j}(k,m), P_k^{(n)} \underline{\widetilde{j}}(k)), \underline{d}^{(0)}(k,m), \underline{d}^{(n)}(k,m)))$$

gewählt.

Hierbei ist

$$f_1^{(n)}(n, s(P_k^{(n)} \underline{j}(k,m), P_k^{(n)} \underline{\widetilde{j}}(k)), \underline{d}^{(0)}(k,m), \underline{d}^{(n)}(k,m))$$

eine Ähnlichkeit des Bildjets mit den Bildanpassungsmodelljets oder Teilmodelljets zum Schritt *n*.

Über $f_2^{(n)}(k,...)$ erhält man dann ein Gesamtmaß über alle Knoten. Hierbei können insbesondere topologische Kosten berücksichtigt werden. Diese bilden ein Maß für die lokale Deformation des Modellgraphen, die während der Anpassung durch die Verschiebung der Modellgraphknoten gegeneinander entsteht.

In weiterhin bevorzugten Formen wird sowohl für $f_1$ als auch für $f_2$ eine Summation, eine gewichtete Summation oder eine Mittelwertbildung gewählt (Bei $f_1$ als Summe über die Bildanpassungsmodelle oder Bildanpassungsmodellteiljets, bei $f_2$ als Summe über die Knoten).

In anderen Konstellationen hat es sich ebenfalls als vorteilhaft erweisen, für $f_1$ bzw. $f_2$ eine Ordnungsoperation wie den Median oder den "Trimmed Mean" zu verwenden.

In einer besonders bevorzugten Form kann die Jetähnlichkeit des Graphen im Schritt *n* zu

$$S^{(n)} = \sum_{k \in K'(n)} l_m^{th}(n) s(P_k^{(n)} \underline{j}(k,m), P_k^{(n)} \underline{\widetilde{j}}(k)) + f^{(n)}(\underline{d}^{(0)}(k,m), \underline{d}^{(n)}(k,m))$$

gewählt werden.

Hierbei bezeichnet $l_m^{th}(n)$ eine Ordnungsoperation auf den *m* Jetähnlichkeiten

$$s(P^{(n)} \underline{j}(k,m), P^{(n)} \underline{\widetilde{j}}(k))$$

, z.B. mit *l=1* das Maximum der *m* Ähnlichkeiten.

Durch $f^{(n)}(\underline{d}^{(0)}(k,m), \underline{d}^{(n)}(k,m))$ werden die Veränderungen der Topologie der Bildanpassungsmodelle berücksichtigt.

In einer weiteren ausgezeichneten Form ist $P^{(n)}$ eine Funktion auf den Jets, die den Vektor $\underline{j}$ in einen Vektor $\underline{j}'$ transformiert, wobei die Komponenten von $\underline{j}'$ eine Teilmenge der Komponenten von $\underline{j}$ sind. Diese Funktion kann aber über den Knoten variieren. Dies ist insbesondere dann von Nutzen, wenn durch Auswahl der niederfrequenten Anteile an einem Knoten die ungefähre Lage des Modells auf der Bildregion festgestellt werden soll, während gleichzeitig an signifikanten anderen Knoten auch höherfrequente Anteile genutzt werden, um die Sensitivität der Lokalisierung und der Detektionsschärfe zu erhöhen.

Sind die Jets in Form von Amplituden ($a_i$) und Phasen ($p_i$) repräsentiert, so kann die Merkmalähnlichkeit $s(\underline{j}, \underline{\widetilde{j}})$ in bevorzugten Ausführungsformen nach einer der folgenden Formeln berechnet werden:

$$s(\underline{j}, \underline{\tilde{j}}) = \frac{\sum_i a_i(m)\tilde{a}_i}{\sqrt{\sum_i a_i(m)a_i(m)\sum_i \tilde{a}_i\tilde{a}_i}}$$

$$s(\underline{j}, \underline{\tilde{j}}) = \frac{\sum_i a_i(m)\tilde{a}_i \cos(p_i(m) - \tilde{p}_i)}{\sqrt{\sum_i a_i(m)a_i(m)\sum_i \tilde{a}_i\tilde{a}_i}}$$

$$s(\underline{j}, \underline{\tilde{j}}) = \frac{\sum_i a_i(m)\tilde{a}_i \cos(p_i(m) - \tilde{p}_i - \underline{d}\underline{k}_i)}{\sqrt{\sum_i a_i(m)a_i(m)\sum_i \tilde{a}_i\tilde{a}_i}} .$$

In der letzten Formel bezeichnet $\underline{d}$ die Disparität zwischen Modell- und Bildjet. Zur Bestimmung von $s$ variiert man $\underline{d}$ so, daß $s$ maximal wird. $\underline{k}_i$ bezeichnet dabei die Lage des i-ten Filters im Fourierraum.

In einer weiteren bevorzugten Form können zudem die Vektoren an den Knoten nicht nur Jets im herkömmlichen Sinne, die aus einer Gabortransformation herrühren, darstellen, sondern auch sogenannte Compound Jets, deren Komponenten auch nicht homogene Repräsentationen einer Region darstellen, z.B. Kanteninformation in einer Komponente und Ähnlichkeit zu einer Farbe in einer anderen.

Darüber hinaus ist die Kombination mehrerer dieser Verfahren (d.h. der den Verfahren zugehörigen Bildanpassungsmodelle) innerhalb eines Knotens des Strukturgraphen sinnvoll, da die Ergebnisse der einzelnen Verfahren bei der Berechnung einer Gesamtbewertung (d.h. Güte der Anpassung) für den Knoten eine genauere Beurteilung der zugrundeliegenden Bilddaten zulassen, als dies mit jedem Verfahren für sich allein möglich wäre.

Eine Sonderform des hier beschriebenen Verfahrens ist das Bunchgraphmatching, das sich als

$$S = \sum_{k \in K} \max_m \; s(\underline{j}(k,m), \underline{\tilde{j}}(k))$$

darstellen lässt.

In einer möglichen Ausführung besitzen die Bildanpassungsmodelle an den Knoten jeweils eine Menge gleichartiger Merkmale, sogenannte Bündel-Jets. Diese Bündel repräsentieren in der Regel einen speziellen Aspekt eines Objekts als eine Menge von Merkmalen, die aus einer Menge von individuellen Ausprägungen gewonnen wurden. Repräsentiert ein solches Bildanpassungsmodell ein Gesicht, so sind rechtes Auge, linkes Auge, Mund und Nase spezielle Aspekte. Sie werden jeweils durch eine Menge von Merkmalen repräsentiert, die aus den entsprechenden Aspekten von einer Menge von Vergleichsbildern gewonnen wurden, die jeweils das Gesicht einer anderen Person mit eventuell anderem Gesichtsausdruck zeigen.

Die Anzahl der Merkmale, die benötigt wird, um einen repräsentativen Teil der unterschiedlichen Ausprägungen abzudecken und damit eine hinreichend allgemeine Repräsentation des Aspekts zu erhalten, variiert. Dies ist zum einem von Knoten zu Knoten des Bildanpassungsmodells der Fall, denn das Objekt besitzt in der Regel einfache Aspekte, die für alle Individuen sehr ähnlich sind, und gleichzeitig andere komplexere Aspekte, die sich von Individuum zu Individuum stark unterscheiden.

Bei Verwendung von Filtern unterschiedlicher Größe kommt noch die Abhängigkeit von der Auflösung hinzu. So genügen in der Regel für die aus den groben Filtern gewonnenen Merkmale weniger Repräsentanten, während die gleichen Aspekte für die Merkmale der feiner auflösenden Filter stärker variieren und daher mehr Merkmale von unterschiedlichen Individuen benötigt werden, um die gleiche Allgemeingültigkeit der Repräsentation zu erreichen, wie dies für die grob aufgelösten Filter und deren Merkmale der Fall ist. Die Anzahl der Merkmale in den Bündeln der Bildanpassungsmodellknoten nimmt demnach ab, wenn die Auflösung der Filter von den Endknoten hin zum Startknoten verringert wird.

Die klassische Repräsentation mit nur einem Bildanpassungsmodell kann von dieser Tatsache nicht profitieren, da die Merkmale jeweils alle Filter von grob- bis feinauflösend umfassen.

Bevorzugt wird der Strukturgraph so eingerichtet, dass die Merkmale Kombinationen von verschiedenartigen Jets umfassen. Im Hinblick auf die Auswertung des Strukturgraphen ist es sinnvoll, dass die Individuen, von denen die Merkmale gewonnen werden, welche zu der optimalen Anpassung eines Bildanpassungsmodells auf einer Ebene beitragen, von Ebene zu Ebene wechseln.

Dies ermöglicht eine sehr kompakte Repräsentation durch den Strukturgraphen, da bei der klassischen Graphenanpassung stets Merkmale erforderlich sind, welche alle verwendeten Filter mit ihren unterschiedlichen Auflösungen beinhalten. Hierbei müsste ein Bündel für alle möglichen Kombinationen der Merkmale für die einzelnen Auflösungen, jeweils ein entsprechendes Merkmal enthalten, um die gleiche Allgemeinheit zu erreichen, die wie beschriebene Repräsentation mittels des Strukturgraphen. Neben der Verwaltung der sehr großen Anzahl an Merkmalen, die nach den Gesetzen der Kombinatorik notwendig sind, macht auch die Beschaffung der Daten für all diese Individuen diesen Ansatz sehr aufwendig, wenn nicht gar unpraktikabel.

Das beschriebene Verfahren eignet sich in einer Weiterbildung hervorragend für die Bildkomprimierung und Bilddekomprimierung.

Die Bildkomprimierung umfasst die Schritte: Komprimieren jedes erkannten Objekts mit einem für die entsprechende Objektklasse vorgegebenen Kompressionsfaktor, wobei die Steuerung der Parameter des Komprimierungsverfahrens auf den Parametern der Ergebnisse der Szenenanalyse basiert, und Komprimieren des nicht mit Objekten belegten Bildbereichs (Hintergrund) mit einem höheren vorgegebenen Kompressionsfaktor.

Bei der Komprimierung wird das Bild entsprechend der oben beschriebenen Szenenanalyse in einzelne Objekte segmentiert. Diese Objekte sind dabei bereits durch die Bildanpassungsmodelle entlang des zugehörigen Weges im Strukturgraphen in ihre Bestandteile zerlegt worden. Die Information aus der Segmentierung, sowie der Zerlegung der Objekte kann für die Komprimierung in vielfacher Weise genutzt werden:

- Durch die Steuerung der Parameter eines herkömmlichen Komprimierungsverfahrens wird dafür gesorgt, das die "interessanten" Objekte mit guter Qualität nach der Dekomprimierung wiedergegeben werden können, während die "uninteressanten" Bildbereiche stärker komprimiert werden, wobei die daraus resultierenden Qualitätsverluste bei der Wiedergabe nicht weiter störend wirken.

- Ist bei der Dekomprimierung der Strukturgraph verfügbar, so kann eine Kennung für den Weg im Strukturgraph, der für ein Objekt ermittelt wurde, übertragen werden. Bei der Dekomprimierung kann dann eine Art Phantomobjekt basierend auf dem Wissen über den Weg im Strukturgraphen generiert werden. Zusätzlich kann Information kodiert werden, die es erlaubt das Phantomobjekt an das tatsächliche Objekt anzupassen. Auf diese Weise muss nur ein sehr kompakter Kode für die Objektklasse (der Weg im Strukturgraph) und die Information über die Variation des konkreten Objekts gegenüber seinem Klassenrepräsentanten übertragen werden.

- Anstatt den gesamten Strukturgraphen für die Dekomprimierung vorzuhalten, kann der relevante Teil initial kodiert werden. Bei der Komprimierung von Bildsequenzen muss der Teil des Strukturgraphen, der für ein Objekt benötigt wird nur einmal übertragen werden, anschließend kann der entsprechende Teil wieder durch eine kurze Kennung kodiert werden.

Die Bilddekomprimierung eines solchermaßen komprimierten Bildes erfolgt durch die Umkehrung der bei der Komprimierung vorgenommenen Verfahrensschritte.

Wie bereits unter Bildkomprimierung/-dekomprimierung beschrieben, kann die gewonnene Information über die Bildinhalte auch dazu verwendet werden, um die konkreten Objekte im Bild durch die Repräsentanten ihrer Objektklasse zu ersetzen.

Die bevorzugte Weiterbildung des entsprechenden Verfahrens umfasst die Schritte: Bereitstellen von Referenzbildem der Objektrepräsentanten, Ersetzen des wenigstens einen ausgewählten erkannten Objekts durch den Objektrepräsentanten, wobei ein Teil der Parameter der Bildanpassungsmodelle zur Steuerung der Objektrepräsentanten verwendbar ist.

Diese Technik kann auch dazu verwendet werden, anstatt der Repräsentanten beliebige Platzhalter, sogenannte Avatare zu benutzen. Durch die Verarbeitung von Bildfolgen und die sich daraus ergebende Verfolgung von Objekten und ihren intrinsischen Bewegungen können diese Avatare gesteuert werden. Diese Technik findet Anwendung bei der Videotelefonie, dem 3D Internet-Chat, in der Trickfilmtechnik und beim Steuern von virtuellen Figuren einer interaktiven Software, wie zum Beispiel ein Spiel oder ein virtuelles Museum.

Ähnlich können vorteilhafte Weiterbildungen des erfindungsgemäßen Verfahrens dazu verwendet werden, in einem Bild den Bildhintergrund durch einen anderen Hintergrund zu ersetzen, indem wenigstens ein Referenzbild für den anderen Hintergrund bereitgestellt werden, und dann wenigstens ein nach den entsprechenden erfindungsgemäßen Verfahren erkanntes Objekt in dem Referenzbild eingefügt wird.

Dabei sind auch Kombinationen der letztgenannten Verfahren möglich, so dass - ausgehend von einem realen Bild mit Objekt(en) und Hintergrund - ein artifizielles Bild erzeugt wird, wobei wenigstens eines dieser Objekte durch einen Objektrepräsentanten und der Hintergrund durch einen anderen Hintergrund ersetzt wird.

Um solche Bilder leichter visualisieren zu können, ohne jeweils die gesamte Information verarbeiten bzw. speichern bzw. übertragen zu müssen, stellt eine bevorzugte Weiterbildung des erfindungsgemäßen Verfahrens eine Datenbank mit den Objektrepräsentanten und/oder der Referenzbilder für den Hintergrund bereit. Insbesondere zur Übertragung solchermaßen bearbeiteten Bilder ist es zweckmäßig, wenn die Datenbank auch auf der Empfängerseite bereitgestellt ist.

Insbesondere für alle Arten von Trickfilmtechniken geeignet ist eine Weiterbildung, bei der die Objektrepräsentanten reelle Objekte und/oder virtuelle Objekte umfassen.

Dadurch können dann erwünschte Szenen nahezu beliebig zusammengesetzt werden.

Eine besonders vorteilhafte Weiterbildung des erfindungsgemäßen Verfahrens kann zu einer Verarbeitung der einzelnen Bilder einer Bildfolge verwendet werden: Hierzu werden die Parameter der Bildanpassungsmodelle mit Startwerten belegt, die einen Teil der Parameter aus der Verarbeitung vorangegangener Bilder benutzt.

Im Vergleich zur unabhängig voneinander durchgeführter Verarbeitung von Einzelbildern kann hierdurch eine erhebliche Beschleunigung des Verarbeitungsprozesses erreicht werden.

Vorzugsweise werden die möglichen Variationen der Parameter der Bildanpassungsmodelle basierend auf einem Teil der Parameter aus der Verarbeitung vorangegangener Bilder eingeschränkt, da hierdurch die Anzahl der durchzuführenden Rechenoperationen weiter eingeschränkt werden kann. Dies ist vor allem dann sinnvoll, wenn zeitlich aufeinander folgende Bilder einer sich vergleichsweise wenig ändernden Bildszene verarbeitet werden sollen.

Im folgenden werden besondere Ausführungsformen der Erfindung unter Bezugnahme auf die beigefügten Figuren erläutert, in welchen:

Fig. 1:       eine für eine Objekterkennung bevorzugtes Verfahren veranschaulicht,

Fig. 2:       eine für eine Posenschätzung bevorzugtes Verfahren veranschaulicht,

Fig. 3A/3B:   für eine Bildanalyse auf verschiedenen Hierarchieebenen verwendete Bildanpassungsmodelle veranschaulicht,

Fig. 4A/4B:   eine mit den in Fig. 3A/3B gezeigten Bildanpassungsmodellen durchgeführte Bildanalyse veranschaulicht.

Objekterkennung

In dieser Ausführung besteht der Strukturgraph aus einer Kette von Knoten, die jeweils durch gerichtete Kanten verbunden sind.

Die Aufgabe des Auswertungsprozesses liegt hier in der effizienten Wahl von geeigneten Parametern für alle Bildanpassungsmodelle im Strukturgraph. Dies umfasst insbesondere die Position des Objekts im Bild.

In einer besonders zweckmäßigen Ausführung repräsentieren die Bildanpassungsmodelle der Knoten eine Bildinformation, deren Grad der Detaillierung von Ebene zu Ebene in Richtung des Endknotens zunimmt. Der Grad der Detaillierung kann dabei sowohl in der Komplexität des Bildanpassungsmodells und/oder der Auflösung der Repräsentation der Bilddaten variieren.

Um beispielsweise eine Person in einem Bild vollständig mit Körper, Kopf, Armen und Beinen erkennen zu können, wird ein Strukturgraph bereitgestellt, der im Knoten der untersten Ebene ein sehr einfaches Bildanpassungsmodell aufweist, das gerade genug Information über die Bilddaten hat, um die grobe Ausrichtung einer Person als ganzes zu erfassen. Auf den nächst höheren Ebenen umfasst das jeweilige Bildanpassungsmodell zunehmend mehr Details und die verwendete Repräsentation der Bilddaten erlaubt es, diese immer noch verhältnismäßig groben Strukturen wiederzuerkennen, falls sie in dem zu untersuchenden Bild vorhanden sind.

Der Auswertungsprozess beginnt am Knoten der untersten Ebene, dessen Bildanpassungsmodell an die Bilddaten angepasst wird, wobei die Parameter des Bildanpassungsmodells, insbesondere die Parameter für die Positionierung des Modells, variiert werden, bis die bestmögliche (oder wenigstens eine ausreichend gute, d.h. einen vorgegebenen Schwellwert übertreffende Übereinstimmung mit den aktuellen Bilddaten erreicht wird. Der resultierende Parametersatz beschreibt die grobe Ausrichtung der Person im Bild.

Beim Übergang zum Sohnknoten des abgearbeiteten Knotens wird das zugehörige Bildanpassungsmodell mit geeigneten Parametern vorbelegt (Parameter-Initialisierung), wobei die aus den für den abgearbeiteten Knoten durchgeführten Variationsverfahren resultierenden Parameterwerte berücksichtigt werden. Dazu gehört insbesondere die Festlegung der Position und die Wahl eines geeigneten Variationsbereichs für die Position.

Der Anpassungsprozeß verfeinert die Position des Objekts und bestimmt geeignete Parameter für die zusätzlichen Freiheitsgrade, die dies Bildanpassungsmodell von dem vorausgegangenen auszeichnen. In der gleichen Weise wird mit den weiteren Knoten auf dem Weg zum Endknoten und dem Endknoten selbst verfahren.

Am Ende des Auswertungsprozesses sind alle Knoten der Kette abgearbeitet und die ihnen zugeordneten Bildanpassungsmodelle an die Bilddaten angepasst. Dabei kann die vollständige Information über das Objekt, wie zum Beispiel Lage und Art einzelner Teile, auf die Gesamtheit der Bildanpassungsmodelle und ihrer Parameterbelegungen verteilt sein.

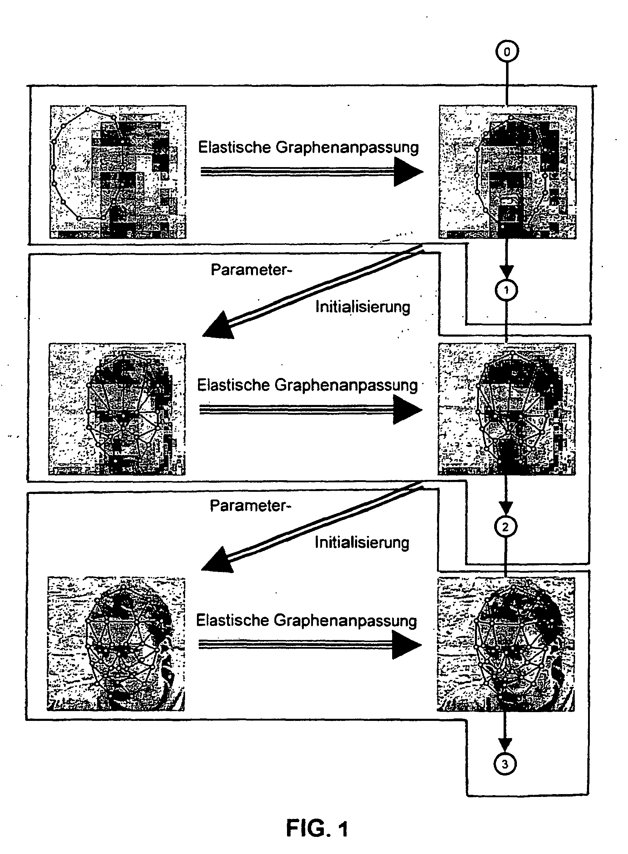

Figur 1 dient zur Veranschaulichung einer zur Objekterkennung bevorzugten Ausführungsform des erfindungsgemäßen Verfahrens.

Die Bezugszeichen 1, 2, 3 stehen für die Knoten des Strukturgraphen, der im vorliegenden Beispiel aus einer einfachen Kette von drei Knoten besteht. Der "Knoten" 0 ist nicht Teil des eigentlichen Strukturgraphen, sondern steht symbolisch für die Initialisierung des Verfahrensablaufs.

Da bei dieser einfachen Ausführungsform ein Knoten und die zugehörige Ebene miteinander identifiziert werden können, werden für Knoten und zugehörige Ebene dieselben Bezugszeichen verwendet.

Aus Gründen der besseren Übersichtlichkeit sind die einem Knoten entsprechenden Bildanpassungsmodelle und -vorgänge in der Zeichenebene jeweils oberhalb des den Knoten repräsentierenden Symbols abgebildet.

Somit wird Knoten 1 im Schritt 0⇨1 abgearbeitet, und entsprechend Knoten 2 im Schritt 1⇨2 und Knoten 3 im Schritt 2⇨3.

Das linke Teilbild zeigt dabei jeweils das Anpassungsmodell vor dem Anpassungsverfahren, das rechte Teilbild das Anpassungsmodell nach dem Anpassungsverfahren.

Das linke Teilbild der ersten Ebene 1 wurde mit beliebigen Parametern initialisiert. Dagegen wurden die entsprechenden linken Teilbilder der Ebenen 2 und 3 mit den Parametern des jeweils rechten Teilbildes der darüber liegenden Ebene initialisiert.

Es ist zu beachten, dass in der Figur 1 - wie auch in den entsprechenden nachfolgenden Figuren - die Hierarchiestufe von oben nach unten zunimmt.

Das Auswerteverfahren beginnt mit dem Knoten 1: Das Bildanpassungsmodell dieses Knotens ist ein sehr grobes Modell für Gesichter, das im wesentlichen die Gesichtsumrandung repräsentiert. Die Bildinformation ist ebenfalls sehr grob repräsentiert, z.B. mit tieffrequenten Filtern für nur zwei verschiedene Richtungen. Dieses Modell wird während des Anpassungsprozesses an allen möglichen Bildpunkten, oder einer adäquat gewählten Untermenge, zum Beispiel durch Unterabtastung, evaluiert, bevor die beste Parametervariation für die Verarbeitung nachfolgender Ebenen verwendet wird. Aufgrund der groben Sicht auf das Bild wird der Anpassungsprozess auf einem groben Raster ausgeführt, so dass nur relativ wenige Möglichkeiten evaluiert werden müssen. Die Bewertung der einzelnen Möglichkeiten erfolgt ebenfalls sehr schnell, da die Bildinformation mit nur wenigen Filtern repräsentiert ist.

Nachdem der Anpassungsprozeß auf der untersten Ebene abgeschlossen ist, wird das Modell von Knoten 2 basierend auf den Ergebnissen seines Vaterknotens 1 initialisiert. Dabei wird insbesondere die Lokalisation des Modells übernommen, d.h. die die Positionierung beschreibenden Parameter von Knoten 1 werden für seinen Sohnknoten 2 berücksichtigt.

Der Anpassungsprozeß für das Anpassungsmodell von Knoten 2 operiert nur noch auf einem kleinen Bildausschnitt und nimmt im wesentlichen lokale Optimierungen des Ergebnisses der ersten Ebene vor. Bei dieser Optimierung wird die nun zusätzlich vorhandene Information des verfeinerten Modells und die genauere Repräsentation des Bildes durch mehr und besser aufgelöste Filter ausgenutzt.

Nach der Anpassung dieses Modells wird das Modell des Knoten 3 entsprechend initialisiert. Die verhältnismäßig aufwendige Anpassung dieses Modells erfolgt nun nur noch innerhalb eines stark eingeschränkten Suchraums und ist daher schnell abgeschlossen.

Die Vorteile des Verfahren gegenüber der herkömmlichen Graphenanpassung und ihren Varianten liegen in der geschickten Steuerung des gesamten Anpassungsprozesses durch den Strukturgraphen.

So wird vermieden, dass detailliertere Modell- und Bildinformationen für eine Anpassung der Grobstruktur berücksichtigt werden müssen: auf dieser Stufe würden sie keinen relevanten Informationsgewinn bringen, gleichzeitig aber den Rechenaufwand extrem erhöhen. Durch Verwendung des Strukturgraphen werden Details erst dann berücksichtigt (auf höheren Hierarchieebenen des Strukturgraphen), wenn dies sinnvoll ist.

Die durchgehende Verwendung von detaillierter Bildinformation und komplexen Modellen führt bei der herkömmlichen (klassischen) Graphenanpassung zudem häufig zu suboptimalen Lösungen. Dieser Nachteil kann durch das erfindungsgemäße Verfahren unter Verwendung des Strukturgraphen ebenfalls vermieden werden.

Posenschätzung

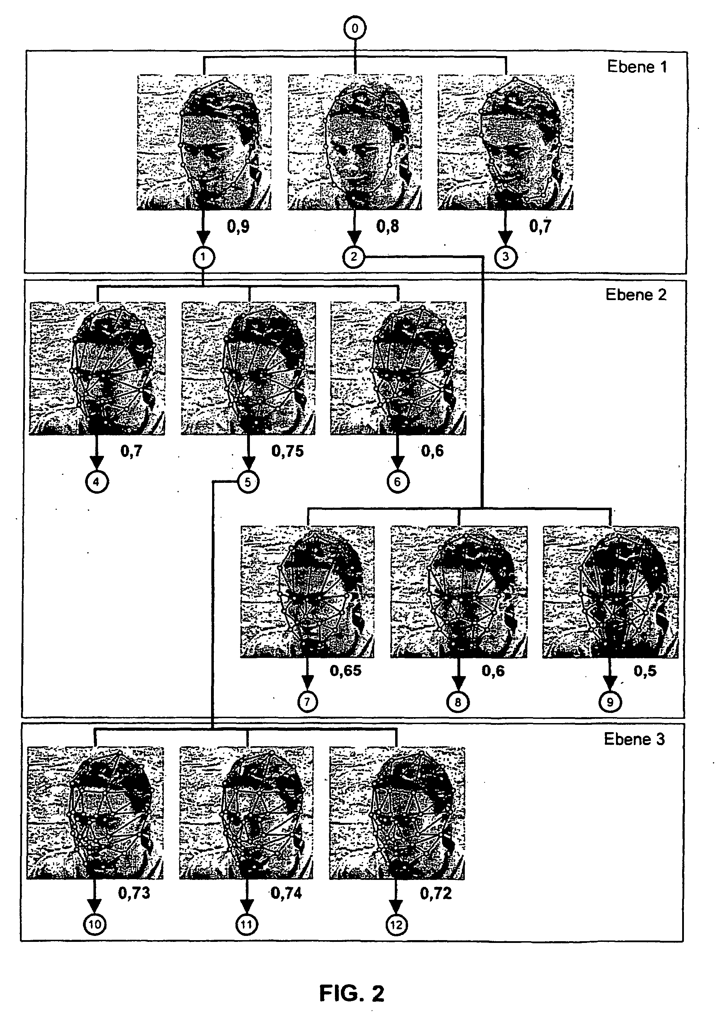

Figur 2 dient zur Veranschaulichung eines insbesondere für eine Posenschätzung verwendbaren Ausführung des erfindungsgemäßen Verfahrens.

Der zugehörige Strukturgraph weist bei dieser Ausführungsform eine Ähnlichkeit mit einem sich verästelnden Baum auf.

Für jede Parametervariation wird eine Bewertung berechnet, die sich aus den Anpassungsmaßen der Bildanpassungsmodelle eines Knotens und den ihnen zugeordneten Gewichten ergibt.

Der Auswertungsprozess wird mit den Sohnknoten des Knotens fortgesetzt, zu dem die beste Bewertung einer Parametervariation erzielt wurde. Die Bildanpassungsmodelle der Sohnknoten dieses Knoten werden mit geeigneten Parametern vorbelegt. Dazu gehört insbesondere die Positionierung des Bildanpassungsmodells im aktuellen Bild.

Im Wettbewerb stehen alle bisher bewerteten Parametervariationen. Daher kann die Auswertung an einem anderen Knoten als einem der Sohnknoten des aktuell betrachteten Knotens fortgesetzt werden. Dies geschieht immer dann, wenn die Bewertungen für alle Parametervariationen der aktuell betrachteten Knoten schlechter werden, als eine zuvor bewertete Parametervariation. Diese Vorgehensweise erlaubt es, den Strukturgraphen auszuwerten, ohne frühzeitig eine Entscheidung treffen zu müssen, die dann möglicherweise zu einem schlechten oder gar falschen Ergebnis führen würde.

Wie schon im ersten Beispiel (Fig. 1) ist der "Startknoten" 0 kein integraler Bestandteil des Strukturgraphen, sondern dient lediglich der Initialisierung des Verfahrens. Durch ihn kann z.B. vorgegeben werden, in welcher Reihenfolge die Knoten 1, 2, 3 der untersten Ebene des Strukturgraphen abgearbeitet werden sollen.

Im Strukturgraphen erfolgt auf der untersten Ebene 1 eine Aufteilung in einfache Strukturen. Mit zunehmender Hierarchiestufe werden die Strukturen immer komplexer, bis sie schließlich an den Endknoten, den Knoten der Ebene 3, die volle Komplexität zur Repräsentation ganzer Objekte besitzen.

Um den Kopf einer Person im Bild in einem breiten Spektrum verschiedener Posen oder Kopfhaltungen erkennen zu können, wird ein Strukturgraph gebildet, in dem die Bildanpassungsmodelle in der untersten Ebene 1 nur die grobe Kopfform von rundlich bis länglich und die grobe Orientierung in der Bildebene repräsentieren.

Die Modelle der nächsten (in der Hierarchie zweituntersten) Ebene 2 repräsentieren die Kopfform und eine grobe Form der inneren Struktur von Gesichtern, wie zum Beispiel die Lage der Augenhöhlen und der Mundregion.

Die Ebene 3 ist die oberste Ebene des Strukturgraphen und weist Endknoten auf, deren Modelle die vollständige Repräsentation der Gesichter in verschiedenen Posen umfassen.

Die Anpassung der Modelle der Knoten der untersten Ebenen erfolgt wie im letzten Beispiel beschrieben und liefert die im Bild angegebenen Bewertungen, wobei jeweils nur die Bewertung für die beste Parametervariation angegeben ist: Es sind dies die Bewertung 0.9 für den im Schritt 0⇨1 abgearbeiteten Knoten 1, die Bewertung 0.8 für den im Schritt 0⇨2 abgearbeiteten Knoten 2, und die Bewertung 0.7 für den im Schritt 0⇨3 abgearbeiteten Knoten 3.

Aufgrund dieser Bewertungen werden nun zunächst die auf der zweiten Ebene des Strukturgraphen liegenden Sohnknoten von Knoten 1 abgearbeitet, wobei deren Bildanpassungsmodelle basierend auf den Ergebnissen des Anpassungsprozesses für Knoten 1 initialisiert werden.

Nach Abarbeitung der Sohnknoten 4, 5, 6 des Knotens 1 ergeben sich die Bewertungen 0.7 für den Knoten 4, 0.75 für den Knoten 5, und 0.6 für den Knoten 6.

Diese Bewertungen sind jedoch schlechter, als die Bewertung des auf der ersten Ebene im Schritt 0⇨2 abgearbeiteten Knotens, dessen Bewertung 0.8 beträgt.

Die weitere Auswertung der mit dem Schritt 0⇨1 beginnenden Wege wird daher zunächst zurückgestellt und zuerst die möglicherweise gewinnversprechendere Abarbeitung der Sohnknoten des im Schritt 0⇨2 abgearbeiteten Knotens 2 durchgeführt.

Hierzu werden zunächst die Modelle der Sohnknoten basierend auf der Anpassung des Modells des im Schritt 0⇨2 abgearbeiteten Knotens 2 initialisiert und anschließend wieder die Anpassungsverfahren durchgeführt.

Die Anpassung führt bei den Knoten 7, 8, 9 zu den im Bild angegebenen Bewertungen 0.65; 0.6; und 0.5. Somit liegt die beste Bewertung der Sohnknoten 7, 8, 9 des Knotens 2 unterhalb der besten Bewertung eines Sohnknotens des im Schritt ⓪ ⇨ ① abgearbeiteten Knotens 1.

Daher wird nun mit Abarbeitung der Sohnknoten des am besten bewerteten Knotens 5 der zweiten Ebene fortgefahren: dies sind die Knoten 10-12.

Die Anpassung der zugehörigen Modelle liefert die beste Bewertung für den Knoten 11, die mit 0.74 auch höher ist als die beste Bewertung der Knoten 7-9 der darunter liegenden Hierarchieebene 2.

Die Auswertung des Strukturgraphen kann somit abgeschlossen werden.

Szenenanalyse

Da Szenen beliebig komplex sein können, ist ein für eine Szenenanalyse verwendbarer Strukturgraph im Allgemeinen ein sehr komplexes Gebilde, wobei es zu den Endknoten typischerweise mehrere Wege gibt. Dies bedeutet, dass es Knoten im Graphen geben kann, die mehr als einen Vaterknoten besitzen. Dies erlaubt es, einzelne Objekte als Teile anderer komplexer Objekte wiederzuverwenden. Dadurch ergibt sich nicht nur eine sparsame Repräsentation des Wissens über Objekte im Strukturgraphen, sondern auch der Auswertungsprozess profitiert davon, da nicht mehr die gleichen Objektteile in unterschiedlichen Kontexten miteinander in Konkurrenz stehen.

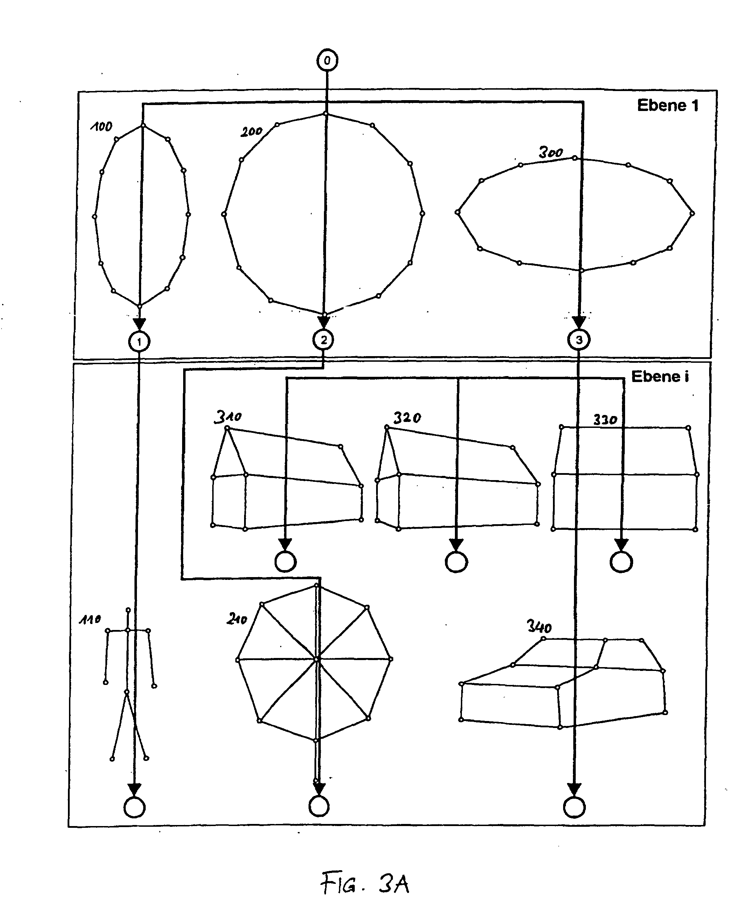

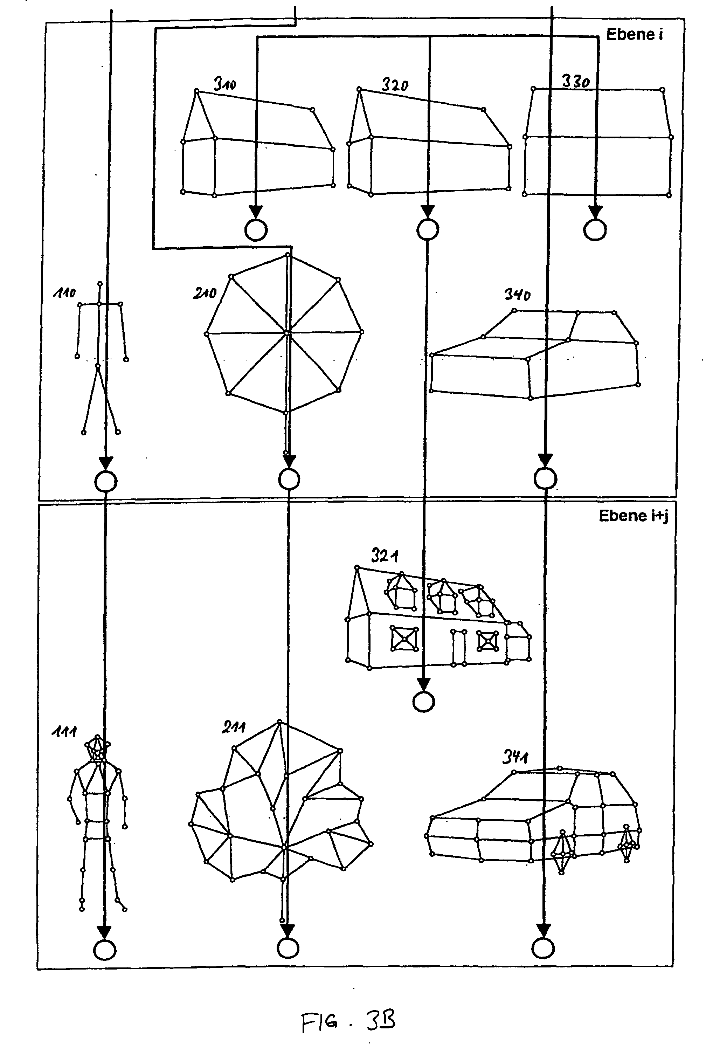

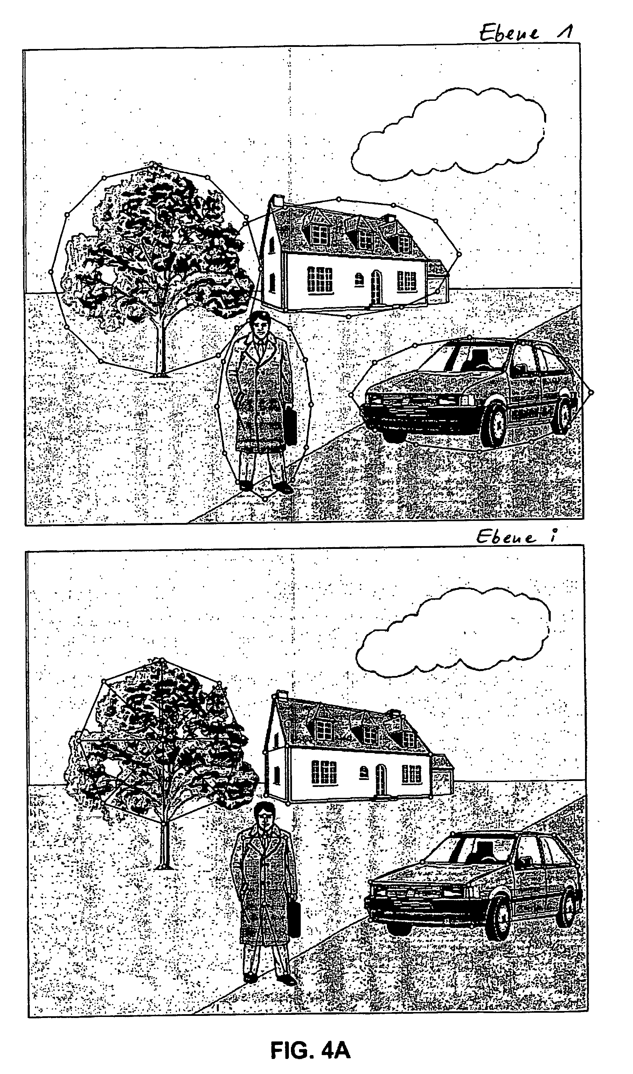

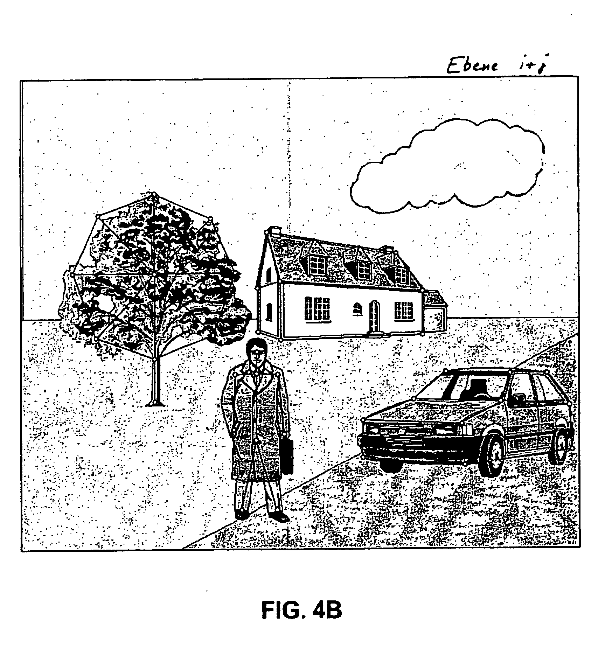

Eine solche Szenenanalyse soll im Folgenden unter Bezugnahme auf die Figuren 3A, 3B und 4A, 4B anschaulich beschrieben werden.

Um eine Beschreibung einer komplexen Szene zu generieren, wird ein Strukturgraph verwendet, dessen Wege an Endknoten enden, deren Modelle verschiedenartige Objekte repräsentieren.

Die unterste Ebene eines solchen Strukturgraphen enthält Modelle, die die Objekte nach Größe, Orientierung und grober Struktur unterscheiden. In den höheren Ebenen werden die Objekte in verschiedene Objektklassen unterteilt, um schließlich an den Endknoten nach allen oder einem Großteil ihrer konkreten Ausprägungen unterschieden zu werden.

So zeigen die Figuren 3A/3B für eine Bildanalyse auf drei verschiedenen Hierarchieebenen 1; ...; i, ...; i+j, ... (1<i<i+j) verwendete Bildanpassungsmodelle 100, 200, 300; 110; 210, 310, 320, 330, 340; 111, 211, 321, 341.

Die Figuren 4A/4B veranschaulichen eine Bildanalyse, die an einer komplexen Szene mit den in den Figuren 3A/3B gezeigten Bildanpassungsmodellen durchgeführt wurde.

Wie das obere Teilbild von Figur 4A veranschaulicht, verarbeitet der Auswertungsprozess zunächst die Modelle 100, 200, 300 der untersten Ebene 1 mit den ihnen zugeordneten Verfahren. Dabei werden die Objekte nach ihrer Orientierung oder Vorzugsrichtung eingeteilt und ihre grobe Position im Bild bestimmt: Für den im oberen Teilbild von Figur 4A gezeigten Mann passt das Modell 100, für den Baum das Modell 200, und sowohl für das Auto als auch das Haus das Modell 300 am besten. Mit der Entscheidung für einen Knoten favorisiert das Verfahren zunächst Objekte, der entsprechenden Größe und groben Struktur der Modelle dieses Knotens.

Die weitere Auswertung erfolgt wieder durch die Verarbeitung der Modelle aller Sohnknoten mit den ihnen zugeordneten Verfahren. Die Auswahl des nächsten Knoten erfolgt wieder aus den Knoten, an denen die bisher bewerteten Wege enden. Die Auswertung endet jedoch nicht mit der Ermittlung des ersten vollständigen, d.h. bis zu einem Endknoten führenden Weges, sondern wird fortgesetzt, bis die Bewertung der verbleibenden Wege eine weitere Auswertung uninteressant erscheinen lässt. Das Ergebnis dieser Auswertung besteht somit aus einer Menge von vollständigen Wegen durch den Strukturgraphen, wobei jeder vollständige Weg zu einem Objekt im Bild gehört. Die Menge dieser Wege entspricht somit einer Beschreibung des Bildes, als eine Menge von Objekten und deren Anordnung.

**Patentansprüche**

1. Ein Verfahren zum Anpassen von Bildanpassungsmodellen, welche Beschreibungen von Objekten darstellen, an digitalisierte Bilddaten, umfassend:

    (i) Bereitstellen eines hierarchischen Strukturgraphen, mit:

    Knoten, die jeweils wenigstens ein parametrisiertes Bildanpassungsmodell repräsentieren,

    einer vorgegebenen Anzahl von übereinander angeordneten Ebenen, wobei in jeder Ebene wenigstens ein Knoten liegt,

    Kanten, die paarweise vorbestimmte Knoten verschiedener Ebenen verbinden und für jedes Knotenpaar einen Vaterknoten als den Knoten in der unteren Ebene und einen Sohnknoten als den Knoten in der oberen Ebene definieren;

    (ii) Anwenden des Strukturgraphen auf die Bilddaten, indem, mit der untersten Ebene beginnend, wenigstens ein Knoten abgearbeitet wird,
    wobei das Abarbeiten eines Knotens die Schritte umfasst:

    Anpassen seines wenigstens einen Bildanpassungsmodells an die Bilddaten durch Variation der Modellparameter,

    Ermitteln eines Anpassungsmaßes für jede Parametervariation, als Maß für die Güte der Bildanpassung, und

    Ermitteln einer Bewertung für jede Parametervariation, unter Berücksichtigung des wenigstens einen ermittelten Anpassungsmaßes, und

    wobei die für jede Parametervariation ermittelte Bewertung als Kriterium für das Abarbeiten eines Sohnknotens des abgearbeiteten Knotens verwendet wird und, falls das Kriterium erfüllt ist, das Abarbeiten des Sohnknotens mit der Initialisierung seines wenigstens einen Anpassungsmodells durch vorbestimmte Parameter des Vaterknotens beginnt.

2.  Verfahren nach Anspruch 1, insbesondere zum Erkennen wenigstens eines Objekts einer vorgegebenen Objektklasse in einem Bild,
    wobei der Strukturgraph genau einen Knoten in jeder Ebene enthält, der wenigstens ein Bildanpassungsmodell repräsentiert und vorgegebenen Knoten ein unterer Schwellwert und/oder ein oberer Schwellwert zugeordnet wird,
    wobei das Verfahren mit dem Ergebnis beendet wird,
    dass kein Objekt der vorgegebenen Objektklasse erkannt wird, falls für einen Knoten die Bewertung für jede Parametervariation unterhalb des dem Knoten zugeordneten unteren Schwellwerts liegt, oder
    dass wenigstens ein Objekt der vorgegebenen Objektklasse erkannt wird, falls für einen Knoten die Bewertung für wenigstens eine Parametervariation oberhalb des dem Knoten zugeordneten oberen Schwellwerts liegt oder wenn der Endknoten erreicht wird.

3.  Verfahren nach Anspruch 1 zur Erkennung der Orientierung und/oder Anordnung von Elementen eines Objekts einer Objektklasse in einem Bild, insbesondere zur Posenschätzung,
    wobei der Strukturgraph für jede zu erkennende Orientierung und/oder Anordnung von Elementen des Objekts wenigstens einen Knoten mit wenigstens einem Bildanpassungsmodell für die zu erkennende Orientierung und/oder Anordnung der Elemente des Objekts aufweist, und vorgegebenen Knoten ein oberer und/oder unterer Schwellwert für die Bewertung der Parametervariationen zugeordnet wird,
    wobei auf das Abarbeiten von Sohnknoten derjenigen abgearbeiteten Knoten verzichtet wird, für die die Bewertung für jede Parametervariation unterhalb des dem jeweiligen Knoten zugeordneten unteren Schwellwerts liegt, mit dem Ergebnis,
    dass die entsprechenden Orientierungen und/oder Anordnungen der Elemente des Objekts nicht im Bild nicht vorliegen,
    wobei Sohnknoten derjenigen abgearbeiteten Knoten abgearbeitet werden, für die die Bewertung für wenigstens eine Parametervariation zwischen den dem Knoten zugeordneten unteren und oberen Schwellwerten liegt, und wobei auf das Abarbeiten von Sohnknoten für die Parametervariationen verzichtet wird, deren Bewertung oberhalb des dem jeweiligen Knoten zugeordneten oberen Schwellwerts liegt, mit dem Ergebnis, dass die Orientierung und/oder Anordnung der Elemente des Objekts als im Bild vorliegend eingestuft wird, die die beste Bewertung auf der höchsten vollständig abgearbeiteten Ebene erhielt.

4.  Verfahren nach Anspruch 1 zur Szenenanalyse durch Erkennen von Objekten unterschiedlicher Objektklassen und der Anordnung der Objekte in einem Bild:
    wobei der Strukturgraph für jede Objektklasse wenigstens einen Knoten mit wenigstens einem Bildanpassungsmodell für die Objektklasse aufweist, und vorgegebenen Knoten ein unterer und/oder oberer Schwellwert für die Bewertung der Parametervariationen zugeordnet wird,
    wobei auf das Abarbeiten von Sohnknoten derjenigen abgearbeiteten Knoten verzichtet wird, für die die Bewertung für jede Parametervariation unterhalb des dem jeweiligen Knoten zugeordneten unteren Schwellwerts liegt, mit dem Ergebnis, dass das zugehörige Objekt als im Bild nicht vorliegend eingestuft wird,
    wobei Sohnknoten derjenigen abgearbeiteten Knoten abgearbeitet werden, für die die Bewertung für wenigstens eine Parametervariation zwischen den dem jeweiligen Knoten zugeordneten unteren und oberen Schwellwerten liegt, und
    wobei auf das Abarbeiten von Sohnknoten für die Parametervariationen verzichtet wird, deren Bewertung oberhalb des dem jeweiligen Knoten zugeordneten oberen Schwellwerts liegt, mit dem Ergebnis, dass das zugehörige Objekt als im Bild vorliegend eingestuft wird.

5.  Ein Verfahren nach einem der vorangegangenen Ansprüche, in welchem jedem Knoten des Strukturgraphen ein unterer Schwellwert zugeordnet wird und auf das Abarbeiten von Sohnknoten eines Knotens verzichtet wird, wenn jede Parametervariation eine Bewertung unterhalb des dem Knoten zugeordneten unteren Schwellwerts ergibt.

6.  Ein Verfahren nach einem der vorangegangenen Ansprüche, in welchem für vorgegebene Knoten der untere und oder obere Schwellwert dynamisch anpassbar ist.

7.  Ein Verfahren nach einem der vorangegangenen Ansprüche, wobei zum Abarbeiten von vorgegebenen Knoten wenigstens teilweise Parameter der abgearbeiteten Vaterknoten übernommen werden.

8.  Ein Verfahren nach einem der vorangegangenen Ansprüche, wobei für die Bewertung von vorgegebenen Knoten die Bewertung des Vaterknotens berücksichtigt wird.

9. Ein Verfahren nach einem der vorangegangenen Ansprüche, bei welchem jedem Bildanpassungsmodell und/oder jeder Kante Gewichte zugeordnet werden, die in die Bewertung eingehen.

10. Ein Verfahren nach einem der vorangegangenen Ansprüche, bei welchem die Bildanpassungsmodelle der Knoten der obersten Ebene auf digitalisierten Referenzbilddaten und/oder die Bildanpassungsmodelle vorbestimmter Knoten aus den Bildanpassungsmodellen ihrer Sohnknoten basieren.

11. Ein Verfahren nach einem der vorangegangenen Ansprüche, in welchem die Bildanpassungsmodelle Graphen von Merkmalen umfassen, die das Ergebnis der Anwendung von vorgegebenen Filtern auf Referenzbilddaten sind.

12. Ein Verfahren nach Anspruch 11, in welchem die Merkmale Jets umfassen, wobei die Skalierung der Filter, aus denen die Merkmale gewonnen werden, von unteren Ebenen zu oberen Ebenen im Strukturgraphen kleiner wird.

13. Ein Verfahren nach Anspruch 12, in welchem das Anpassungsmaß für die Parametervariationen zu den Bildanpassungsmodellen nach der Formel

$$S^{(n)} = f^{(n)}(P_k^{(n)}\, \underline{j}(k,m), P_k^{(n)}\, \underline{\tilde{j}}(k), \underline{d}^{(0)}(k,m), \underline{d}^{(n)}(k,m)),\ k \in K'(n) \subseteq K,$$

berechnet wird, wobei:

$\underline{j}(k,m)$ der Jet des Bildanpassungsmodells $m$ am Knoten $k$ ist,

$\underline{\tilde{j}}(k)$ der Jet des Bildes an der Position des Knoten k ist,

$\underline{d}^{(0)}(k,m)$ die ursprüngliche Position des Knoten $k$ des Bildanpassungsmodells $m$ ist,

$\underline{d}^{(n)}(k,m)$ die Position des Knoten $k$ des Bildanpassungsmodells $m$ im Schritt $n$ ist,

$f^{(n)}(...)$ ein Funktional der Bildanpassungsmodelljets und der Bildjets an korrespondierenden Orten ist,

$P_k^{(n)}$ eine Abbildung der Jets $\underline{j}(k,m)$ bzw. $\underline{\tilde{j}}(k)$ darstellt, und

$K'(n)$ eine Teilmenge der Menge $K$ aller Graphknoten $k$ ist.

14. Ein Verfahren nach einem der Ansprüche 12 oder 13, in welchem die Merkmale Kombinationen von verschiedenartigen Jets umfassen.

15. Ein Verfahren nach einem der Ansprüche 2 bis 14 zur Bildkomprimierung und Bildfolgenkomprimierung, mit den Schritten:

Komprimieren jedes erkannten Objekts mit einem für die entsprechende Objektklasse vorgegebenen Kompressionsfaktor, wobei die Steuerung der Parameter des Komprimierungsverfahrens auf den Parametern der Ergebnisse der Szenenanalyse basiert, und
Komprimieren des nicht mit Objekten belegten Bildbereichs mit einem höheren vorgegebenen Kompressionsfaktor.

16. Ein Verfahren zur Dekomprimierung eines nach Anspruch 15 komprimierten Bildes, wobei die Dekomprimierung durch die Umkehrung der bei der Komprimierung vorgenommenen Verfahrensschritte erfolgt.

17. Ein Verfahren zum Ersetzen wenigstens eines ausgewählten, nach einem der Ansprüche 2 bis 14 erkannten Objekts durch einen Objektrepräsentanten, insbesondere durch einen Avatar, mit den Schritten:

Bereitstellen von Referenzbildern der Objektrepräsentanten,

Ersetzen des wenigstens einen ausgewählten erkannten Objekts durch den Objektrepräsentanten, wobei ein Teil der Parameter der Bildanpassungsmodelle zur Steuerung der Objektrepräsentanten verwendbar ist.

**18.** Ein Verfahren zum Ersetzen eines Bildhintergrundes durch einen anderen Hintergrund, mit den Schritten:

Bereitstellen wenigstens eines Referenzbildes für den anderen Hintergrund,

Platzieren der nach einem der Ansprüche 2 bis 14 erkannten Objekte in dem Referenzbild.

**19.** Ein Verfahren, in welchem die Verfahren nach den Ansprüchen 17 und 18 kombiniert werden, wobei wenigstens ein ausgewähltes erkanntes Objekt durch einen Objektrepräsentanten und der Hintergrund durch einen anderen Hintergrund ersetzt wird.

**20.** Ein Verfahren zur Visualisierung von nach einem der Ansprüche 17 bis 19 bearbeiteten Szenen, mit dem zusätzlichen Schritt:

Bereitstellen einer Datenbank mit den Objektrepräsentanten und/oder der Referenzbilder für den Hintergrund.

**21.** Ein Verfahren nach einem der Ansprüche 17 bis 20, in welchem die Objektrepräsentanten reelle Objekte und/oder virtuelle Objekte umfassen.

**22.** Ein Verfahren nach einem der vorangegangen Ansprüche, wobei zur Verarbeitung der einzelnen Bilder einer Bildfolge die Parameter der Bildanpassungsmodelle mit Startwerten belegt werden, die einen Teil der Parameter aus der Verarbeitung vorangegangener Bilder benutzt.

**23.** Ein Verfahren nach Anspruch 22, wobei die möglichen Variationen der Parameter der Bildanpassungsmodelle basierend auf einem Teil der Parameter aus der Verarbeitung vorangegangener Bilder eingeschränkt werden.

**Claims**

**1.** A method of matching picture matching models, which represent descriptions of objects, to digitised picture data, comprising:

(i) provision of an hierarchical structure graph comprising:

nodes, wherein each node represents at least one parameterised picture matching model,

a specified number of levels, arranged one above the other, whereby at least one node is located in each level,

edges connecting pairs of predetermined nodes of different levels and defining, for each pair of nodes, a father node as the node in the lower level and a son node as the node in the upper level;

(ii) application of the structure graph to the picture data in that, starting with the lowermost level, at least one node is processed,
whereby the processing of a node comprises the steps:

matching of its at least one picture matching model to the picture data by variation of the model parameters,

determination of a matching quantity for each parameter variation as a measure of the quality of the picture match, and

determination of an assessment for each parameter variation, taking into account the at least one determined matching quantity,
and

whereby the assessment found for each parameter variation is applied as a criterion for the processing of a son node of the processed node and, if the criterion is fulfilled, the processing of the son node starts with the initialisation of its at least one matching model through predetermined parameters of the father node.

2. A method according to Claim 1, in particular for the recognition of at least one object of a given object class in a picture,
whereby the structure graph includes precisely one node in each level, which at least represents one picture matching model and a lower threshold value and / or an upper threshold value is assigned to given nodes,
whereby the method is terminated with the result,
that no object of the given object class is recognised, if for a node the assessment of each parameter variation lies below the lower threshold value assigned to the node, or
that at least one object of the given object class is recognised, if for a node the assessment of at least one parameter variation lies above the upper threshold value assigned to the node or if the end node is reached.

3. A method according to Claim 1 for the recognition of the orientation and / or arrangement of elements of an object of an object class in a picture, in particular for estimating the pose,
whereby the structure graph for each orientation to be recognised and / or arrangement of elements of the object exhibits at least one node with at least one picture matching model for the orientation to be recognised and / or arrangement of the elements of the object, and an upper and / or lower threshold value for the assessment of the parameter variations is assigned to given nodes,
whereby the processing of son nodes of those processed nodes is waived for which the assessment of each parameter variation lies below the lower threshold value assigned to the relevant node with the result that the corresponding orientations and / or arrangements of the elements of the object are not present in the picture,
whereby son nodes of those processed nodes are processed for which the assessment of at least one parameter variation lies between the upper and lower threshold values assigned to the node, and
whereby processing of son nodes for the parameter variations is waived whose assessment lies above the upper threshold value assigned to the relevant node with the result that the orientation and / or arrangement of the elements of the object is classified as being present in the picture which receives the best assessment on the highest fully processed level.

4. A method according to Claim 1 for scene analysis through the recognition of objects of different object classes and the arrangement of the objects in a picture:
whereby the structure graph for each object class exhibits at least one node with at least one picture matching model for the object class and a lower and / or upper threshold value is assigned to given nodes for the assessment of the parameter variations,
whereby the processing of son nodes of those processed nodes is waived for which the assessment of each parameter variation lies below the lower threshold value assigned to the relevant node with the result that the associated object is classified as not being present in the picture,
whereby son nodes of those processed nodes are processed for which the assessment of at least one parameter variation lies between the lower and upper threshold values assigned to the relevant nodes, and
whereby the processing of son nodes for the parameter variations is waived whose assessment lies above the upper threshold value assigned to the relevant node with the result that the associated object is classified as being present in the picture.

5. A method according to one of the previous claims, in which a lower threshold value is assigned to each node of the structure graph and the processing of son nodes of a node is waived if each parameter variation produces an assessment below the lower threshold value assigned to the node.

6. A method according to one of the previous claims, in which the lower and / or upper threshold value for given nodes is dynamically adaptable.

7. A method according to one of the previous claims, whereby, at least partially, parameters of the processed father nodes are accepted for the processing of given nodes.

8. A method according to one of the previous claims, whereby the assessment of the father node is taken into account for the assessment of given nodes.

9. A method according to one of the previous claims, in which weightings, which are included in the assessment, are assigned to each picture matching model and / or each edge.

**10.** A method according to one of the previous claims, in which the picture matching models of the nodes of the uppermost level are based on digitised reference picture data and / or the picture matching models of predetermined nodes are based on the picture matching models of their son nodes.

**11.** A method according to one of the previous claims, in which the picture matching models comprise graphs of features which are the result of the application of predetermined filters on reference picture data.

**12.** A method according to Claim 11, in which the features include jets, whereby the scaling of the filters from which the features are obtained becomes smaller from the lower levels to the upper levels in the structure graph.

**13.** A method according to Claim 12, in which the matching quantity for the parameter variations is computed according to the formula

$$S^{(n)} = f^{(n)}(P_k^{(n)}\, \underline{j}(k,m), P_k^{(n)}\, \underline{\tilde{j}}(k), \underline{d}^{(0)}(k,m), \underline{d}^{(n)}(k,m)),\ k \in K'(n) \subseteq K\ ,$$

whereby:

$\underline{j}(k,m)$ is the jet of the picture matching model $m$ on the node $k$,

$\underline{\tilde{j}}(k)$ is the jet of the picture on the position of the node $k$,

$\underline{d}^{(0)}(k,m)$ is the original position of the node $k$ of the picture matching model $m$,

$\underline{d}^{(n)}(k,m)$ is the position of the node $k$ of the picture matching model $m$ in step $n$,

$f^{(n)}(...)$ is a functional of the picture matching model jet and the picture jet at corresponding locations,

$P_k^{(n)}$ represents an image of the jets $\underline{j}(k,m)$ or $\underline{\tilde{j}}(k)$, and

$K'(n)$ is a subset of the set $K$ of all graph nodes $k$.

**14.** A method according to any one of Claims 12 or 13, in which the features comprise combinations of various types of jet.

**15.** A method according to any one of Claims 2 to 14 for picture compression and picture sequence compression, comprising the steps:

compressing each recognised object with a compression factor specified for the corresponding object class, whereby the control of the parameters of the compression method is based on the parameters of the results of the scene analysis, and
compressing the picture region not occupied by objects using a higher specified compression factor.

**16.** A method of decompressing a picture, compressed according to Claim 15, whereby the decompression occurs through the reversal of method steps carried out during the compression.

**17.** A method substituting at least one selected object, recognised according to any one of Claims 2 to 14, by an object representative, in particular by an avatar, comprising the steps:

providing reference pictures of the object representatives,

substituting the at least one selected recognised object by the object representative, whereby part of the parameters of the picture matching models may be used for the control of the object representative.

**18.** A method of substituting a picture background by an alternate background, comprising the steps:

providing at least one reference picture for the alternate background,

positioning of the objects recognised according to any one of Claims 2 to 14 in the reference picture.

19. A method in which the methods according to the Claims 17 and 18 are combined, whereby at least one selected recognised object is substituted by an object representative and the background is substituted by the alternate background.

20. A method of visually displaying scenes processed according to any one of Claims 17 to 19, comprising the additional step:

providing a data base with the object representatives and / or the reference pictures for the background.

21. A method according to any one of Claims 17 to 20, in which the object representatives comprise real objects and / or virtual objects.

22. A method according to one of the previous claims, whereby, for the processing of individual pictures in a picture sequence, the parameters of the picture matching models are assigned initial values which use part of the parameters from the processing of previous pictures.

23. A method according to Claim 22, whereby the possible variations of the parameters of the picture matching models, based on a part of the parameters from the processing of previous pictures, are restricted.

**Revendications**

1. Procédé pour l'adaptation de modèles d'adaptation d'image, représentant des descriptions d'objets, à des données d'image numérisées, comprenant :

(i) mise à disposition d'un graphe structuré hiérarchique, comprenant :

des noeuds, chaque noeud représente au moins un modèle d'adaptation d'image paramétré,

un nombre de niveaux prédéterminé, disposés l'un au dessus de l'autre, où à chaque niveau on trouve au moins un noeud,

des arcs reliant des couples de noeuds prédéterminés de niveaux différents et définissant, pour chaque couple de noeud, un noeud père comme étant le noeud du niveau inférieur et un noeud fils comme étant le noeud du niveau supérieur ;

(ii) application du graphe structuré sur les données d'image dans laquelle, en commençant par le niveau le plus bas, au moins un noeud est traité,
où le traitement d'un noeud comprend les étapes :

adaptation de son au moins un modèle d'adaptation d'image aux données d'image par la variation des paramètres du modèle,

détermination d'une mesure d'adaptation pour chaque variation de paramètre comme une mesure de la qualité de l'adaptation de l'image, et

détermination d'une évaluation pour chaque variation de paramètre, prenant en compte l'au moins une mesure d'adaptation déterminée,
et

l'évaluation déterminée pour chaque variation de paramètre est utilisée comme critère pour le traitement d'un noeud fils du noeud traité et, si le critère est satisfait, le traitement du noeud fils commence avec l'initialisation de son au moins un modèle d'adaptation par des paramètres prédéterminés du noeud père.

2. Procédé selon la revendication 1, en particulier pour la reconnaissance d'au moins un objet d'une classe d'objet prédéterminée dans une image, dans lequel

le graphe structuré comprend exactement un noeud à chaque niveau qui représente au moins un modèle d'adaptation d'image, et une valeur seuil inférieure et/ou une valeur seuil supérieure sont attribuées aux noeuds prédéterminés,

le procédé est terminé par un des résultats suivants,

aucun objet de la classe d'objet prédéterminée est reconnu, si pour un noeud l'évaluation de chaque variation de paramètre est en dessous de la valeur seuil inférieure attribuée au noeud, ou

au moins un objet de la classe d'objet prédéterminée est reconnu, si pour un noeud l'évaluation d'au moins une variation de paramètre est au dessus de la valeur seuil supérieure attribuée au noeud, ou si le noeud final est atteint.

3. Procédé suivant la revendication 1 pour la reconnaissance de l'orientation et/ou la disposition des éléments d'un objet d'une classe d'objet dans une image, en particulier pour estimer la pose, dans lequel

le graphe structuré, pour chaque orientation et/ou disposition des éléments de l'objet à reconnaître, comprend au moins un noeud avec au moins un modèle d'adaptation d'image pour l'orientation et/ou la disposition des éléments de l'objet à reconnaître, et une valeur seuil supérieure et/ou inférieure, pour l'évaluation des variations de paramètre, est attribuée aux noeuds prédéterminés,

on renonce au traitement des noeuds fils de ces noeuds traités pour ceux dont l'évaluation de chaque variation de paramètre est au dessous de la valeur seuil inférieure attribuée au noeud correspondant, avec le résultat que les orientations et/ou les dispositions des éléments de l'objet correspondantes ne sont pas présentes dans l'image,

des noeuds fils de ces noeuds traités sont traités pour ceux dont l'évaluation d'au moins une variation de paramètre est entre la valeur seuil supérieure et la valeur seuil inférieure attribuées au noeud, et

on renonce au traitement des noeuds fils pour ceux dont les variations de paramètre dont l'évaluation est au dessus de la valeur seuil supérieure attribuée au noeud correspondant avec le résultat que l'orientation et/ou la disposition des éléments de l'objet sont classées comme étant présentes dans l'image qui reçoit la meilleure évaluation au niveau le plus haut complètement traité.

4. Procédé selon la revendication 1 pour l'analyse de scène par la reconnaissance d'objets de différentes classes d'objet et la disposition des objets dans une image, dans lequel:

le graphe structuré pour chaque classe d'objet comprend au moins un noeud avec au moins un modèle d'adaptation d'image pour la classe d'objet, et une valeur seuil inférieure et/ou supérieure est attribuée aux noeuds prédéterminés pour l'évaluation des variations de paramètre,

on renonce au traitement des noeuds fils de ces noeud traités pour ceux dont l'évaluation de chaque paramètre de variation est au dessous de la valeur seuil inférieure attribuée au noeud correspondant avec le résultat que l'objet associé est classé comme n'étant pas présent dans l'image,

des noeuds fils de ces noeuds traités sont traités pour ceux dont l'évaluation d'au moins une variation de paramètre est entre la valeur seuil inférieure et la valeur seuil supérieure attribuées au noeud correspondant, et

on renonce au traitement des noeuds fils pour ceux dont les variations de paramètre dont l'évaluation est au dessus de la valeur seuil supérieure attribuée au noeud correspondant avec le résultat que l'objet associé est classé comme étant présent dans l'image.

5. Procédé selon l'une quelconque des revendications précédentes, dans lequel une valeur seuil inférieure est attribuée à chaque noeud du graphe structuré et le traitement des noeuds fils du noeud est abandonné si chaque variation de paramètre obtient une évaluation au dessous de la valeur seuil inférieure attribuée au noeud.

6. Procédé selon l'une quelconque des revendications précédentes, dans lequel la valeur seuil inférieure et/ou supérieure pour des noeuds prédéterminés est adaptable dynamiquement.

7. Procédé selon l'une quelconque des revendications précédentes, dans lequel au moins partiellement, des paramètres des noeuds père traités sont repris pour le traitement des noeuds prédéterminés.

8. Procédé selon l'une quelconque des revendications précédentes, dans lequel l'évaluation du noeud père est prise en compte pour l'évaluation des noeuds prédéterminés.

9. Procédé selon l'une quelconque des revendications précédentes, dans lequel des pondérations sont attribuées à chaque modèle d'adaptation d'image et/ou à chaque arc.

**10.** Procédé selon l'une quelconque des revendications précédentes, dans lequel les modèles d'adaptation d'image des noeuds du niveau le plus haut sont basés sur des données d'image de référence numérisées et/ou les modèles d'adaptation d'image de noeuds prédéterminées sont basés sur les modèles d'adaptation d'image de leurs noeuds fils.

**11.** Procédé selon l'une quelconque des revendications précédentes, dans lequel les modèles d'adaptation d'image comprennent des graphes de caractéristiques qui sont le résultat de l'application de filtres prédéterminés sur les données d'image de référence.

**12.** Procédé selon la revendication 11, dans lequel les caractéristiques comprennent des jets, où l'échelle des filtres, à partir desquels les caractéristiques sont obtenues, devient plus petite des niveaux inférieurs vers les niveaux supérieurs dans le graphe structuré.

**13.** Procédé selon la revendication 12, dans lequel la mesure d'adaptation pour les variations de paramètre est calculée suivant la formule :

$$S^{(n)} = f^{(n)}(P_k^{(n)} \underline{j}(k,m), P_k^{(n)} \underline{\tilde{j}}(k), \underline{d}^{(0)}(k,m), \underline{d}^{(n)}(k,m)), \ k \in K'(n) \subseteq K \ ,$$

dans laquelle :

$\underline{j}(k,m)$ est le jet du modèle d'adaptation d'image m au noeud k,
$\underline{\tilde{j}}(k)$ est le jet de l'image à la position du noeud k,
$\underline{d}^{(0)}(k,m)$ est la position originale du noeud k du modèle d'adaptation d'image m,
$\underline{d}^{(n)}(k,m)$ est la position du noeud k du modèle d'adaptation d'image m à l'étape n
$f^{(n)}$ (...) est une fonctionnelle du jet du modèle d'adaptation d'image et du jet d'image à des emplacements correspondants,
$P_k^{(n)}$ représente une image des jets $\underline{j}(k,m)$ ou $\underline{\tilde{j}}(k)$, et
$K'(n)$ est un sous-ensemble de l'ensemble K de tous les noeuds k du graphe.

**14.** Procédé selon l'une quelconque des revendications 12 et 13, dans lequel les caractéristiques comprennent des combinaisons de différents types de jet.

**15.** Procédé selon l'une quelconque des revendications 2 à 14, pour la compression d'image et la compression de séquence d'image, comprenant les étapes :

compression de chaque objet reconnu avec un facteur de compression prédéterminé pour la classe d'objet correspondante, où le contrôle des paramètres du procédé de compression est basé sur les paramètres des résultats de l'analyse de la scène, et

compression de la zone d'image non occupée par des objets avec un facteur de compression prédéterminé supérieur.

**16.** Procédé de décompression d'image, compressée selon la revendication 15, dans lequel la décompression s'effectue par l'inversion des étapes du procédé réalisé lors de la compression.

**17.** Procédé de substitution d'au moins un objet sélectionné, reconnu selon l'une quelconque des revendications 2 à 14 par un représentant d'objet, en particulier par un avatar comprenant les étapes :

mise à disposition d'images de référence des représentants d'objet,

substitution du au moins un objet reconnu sélectionné par le représentant d'objet, où une partie des paramètres des modèles d'adaptation d'image est utilisable pour le contrôle du représentant d'objet.

**18.** Procédé de substitution d'un arrière-plan d'image par un autre arrière-plan, comprenant les étapes :

mise à disposition d'au moins une image de référence pour l'autre arrière-plan,

positionnement des objets reconnus selon l'une quelconque des revendications 2 à 14 dans l'image de référence.

19. Procédé dans lequel les procédés selon les revendications 17 et 18 sont combinés, dans lequel au moins un objet reconnu sélectionné est substitué par un représentant d'objet, et l'arrière-plan est substitué par un autre arrière-plan.

20. Procédé pour la visualisation des scènes traitées selon l'une quelconque des revendications 17 à 19, comprenant l'étape supplémentaire :

mise à disposition d'une base de données avec les représentants d'objet et/ou les images de référence pour l'arrière-plan.

21. Procédé selon l'une quelconque des revendications 17 à 20, dans lequel les représentants d'objet comprennent des objets réels et/ou des objets virtuels.

22. Procédé selon l'une quelconque des revendications précédentes, dans lequel, pour le traitement des images individuelles d'une séquence d'image, des valeurs initiales, qui utilisent une partie des paramètres issus du traitement des images précédentes, sont attribuées aux paramètres du modèles d'adaptation d'image.

23. Procédé selon la revendication 22, dans lequel les variations possibles des paramètres des modèles d'adaptation d'image sont limitées en se basant sur une partie des paramètres du traitement des images précédentes.

**FIG. 1**

**FIG. 2**

FIG. 3A

FIG. 3B

Ebene 1

Ebene i

**FIG. 4A**

Ebene i+j

**FIG. 4B**